# EUROPEAN PATENT SPECIFICATION

(11) **EP 3 153 993 B1**
(45) Date of publication and mention of the grant of the patent: **28.07.2021**
(21) Application number: 15306594.1
(22) Date of filing: 08.10.2015
(51) Int. Cl.: G06K 19/06

(54) **METHOD OF SECURING A 2D BARCODE**
VERFAHREN ZUM SICHEREN EINES 2D-STRICHCODES
PROCÉDÉ DE SÉCURISATION D'UN CODE À BARRES 2D

(43) Date of publication of application: 12.04.2017
(73) Proprietor: SURYS, 77607 Marne-la-Vallée Cedex 3 (FR)
(72) Inventor: PIC, Marc, 92100 BOULOGNE BILLANCOURT (FR)
(74) Representative: INNOV-GROUP

(56) References cited:
- WO-A1-2015/067592
- US-B1- 8 297 510
- None

## Description

### DOMAIN OF THE INVENTION

The present invention relates to 2D barcodes, and in particular to securing and authenticating of a 2D barcode.

Any initial message comprising alphanumeric characters can be encoded as a 2D barcode.

Accordingly, there is a correspondence between an initial message and the corresponding 2D barcode, which embeds said initial message.

The properties of the 2D barcode, like e.g. its dimension, depends on the length of the initial message, i.e. the number of alphanumeric characters.

Today, 2D barcode types such as e.g. PDF417, DataMatrix, QR-Code, Aztec Code, MaxiCode, Codablock F etc., are widely used for various reasons. US 8 297 510 B1 is related to: providing a 2D barcode that is a representation of digits and characters, the 2D barcode comprising redundancies. The encoding and decoding software comprising error correction capabilities. WO2015/067592 A1 concerns decoding/encoding information in a two-dimensional barcode, the barcode comprising an orientation pattern and a payload data pattern, both being compiled of first and second type elements.

Typically, an initial message can comprise at least part of a uniform resource identifier or a path. Scanning a 2D barcode that embeds said initial message will hyperlink to a web page corresponding to such uniform resource identifier or such path, depending on the scanning software parameters.

The initial message, hence its corresponding 2D barcode, can be generic or unique.

For instance a generic initial message is useful for commercial purposes or for identifying a batch of products, but is useless for identifying a given product, even within a batch.

For instance, a unique initial message can be used for identifying a unique product on which a corresponding unique 2D barcode is affixed to or is embedded in. In that case typically, the initial message contains a unique identifier.

To preserve the uniqueness property of a unique 2D barcode, there is a need to secure such 2D barcode.

In that context, the present invention relates, according to a first of its objects, to a method of securing a 2D barcode comprising the steps of:
- Providing an initial message comprising a unique identifier (ID), and
- Encoding said initial message as a set of predefined symbols so as to generate said redundant initial 2D barcode, said redundant initial 2D barcode comprising at least one redundant zone.

Accordingly, a redundant initial 2D barcode can be provided or generated by any standard 2D barcode generator.

The method according to the present invention is essentially characterized in that it further comprises:
- generating a unique secret character string having a predefined fixed size,
- encoding the unique secret character string as a set of predefined symbols identical to the symbols used to generate the redundant initial 2D barcode, and
- inserting said encoded unique secret character string in at least one redundant zone of the redundant initial 2D barcode, each symbol of said encoded unique secret character string having a predefined position, so as to create a final 2D barcode.

Accordingly, the present invention secures a 2D barcode with a technique which is similar to steganography wherein the unique secret character string is concealed.

Advantageously, when the unique secret character is inserted within a redundant zone, the present invention does not compromise the readability of the initial message in the final 2D barcode using any standard application software. When a final 2D barcode is read (i.e. scanned) by a standard 2D barcode reading application software, the initial message is decoded and no alert is generated, but the unique secret character cannot be retrieved, being considered as an error.

Therefore in one embodiment, the method further comprises the steps of:
- Providing the initial 2D barcode with at least one redundant zone, and
- inserting said unique secret character string in said at least one redundant zone.

Thanks to this feature, the insertion of the secret character string does not alter the initial message.

In one embodiment, said redundant initial 2D barcode comprises a unique redundant zone, and the step of inserting said unique secret character string comprises:
- inserting said unique secret character string within said unique redundant zone.

In one embodiment, said redundant initial 2D barcode comprises several redundant zones, and the step of inserting said unique secret character string comprises:
- inserting said unique secret character string within a predefined redundant zone, or
- inserting said unique secret character string within a plurality of said redundant zones.

Because the shape and the position of the secret zone is known, it is easier to decode the 2D barcode once printed or displayed.

In one embodiment, the step of encoding the unique secret character string comprises the step of encoding the unique secret character string in a redundant manner.

Thanks to this feature, the secret character string can be more easily retrieved even if the printed 2D barcode has been altered.

In one embodiment, the step of inserting said unique secret character string in at least one secret zone of the initial 2D barcode comprises a step of replacing, in said secret zone(s) of the initial 2D barcode, an existing predefined symbol coding the initial message with a predefined symbol of the unique secret character string, for each predefined symbol of the unique secret character string.

In one embodiment, the method further comprises a step of computing the length of the unique secret character string as a function of at least one of the following parameters:
- the type of initial 2D barcode;
- the level of redundancy of the final 2D barcode;
- the size of the initial 2D barcode; and
- the length of the initial message.

In one embodiment, the method further comprises a step of printing the final 2D barcode, or displaying the final 2D barcode on a display screen.

Thanks to this feature, the final 2D barcode can be affixed to a support, e.g. an industrially manufactured product, including as a label.

In one embodiment, the method further comprises a step of printing the final 2D barcode, and further comprising a step of providing the printed final 2D barcode with at least one optically variable device.

Thanks to this feature, the printed final 2D barcode is secured against techniques such as photocopying.

In one embodiment, the step of generating a unique secret character string further comprises a step of either:
- computing the unique secret character string independently from the initial message; or
- computing the unique secret character string the unique secret character string in dependence of the initial message or of the unique identifier, as a result of a one way function, or any cryptographic function, applied to the unique identifier, or applied to the initial message.

In one embodiment, the method further comprises a step of providing a Uniform Resource Identifier as at least part of the initial message.

Thanks to this feature, a final 2D barcode according to the present invention can be implemented for instance for a B to B or a B to C campaign.

According to a second of its objects, the present invention relates to a method of authenticating a secured redundant 2D barcode according to any of the preceding embodiments, and comprising a message and a unique identifier, said method comprising the steps of:
- scanning said 2D barcode with an optical sensor and recording the digital image of the 2D barcode obtained in a memory, and
- decoding said digital image and extracting from it both the extracted message and the extracted unique identifier it contains.

It is essentially characterized in that it further comprises the steps of:
- generating a regenerated 2D barcode from the extracted message, and
- comparing the regenerated 2D barcode with said digital image of the 2D barcode recorded in a memory.

Such regeneration avoids any connection with a remote database over a transmission communication network.

In one embodiment, the method further comprises the steps of:
- decoding as a regenerated secret character string the result of the comparison step, and recording said regenerated secret character string in a memory,
- computing the result (ID_h) of a one-way function applied to the extracted unique identifier and recording said result in a memory, said one-way function preferably being the same as the one-way function used to generate the unique secret character string, and
- comparing said result (ID_h) with said regenerated secret character string.

The comparison step is a way to detect if the printed final 2D barcode has been altered (including tampered).

In one embodiment, the step of scanning said 2D barcode comprises a step of providing, as said 2D barcode, a final 2D barcode according to the first object of the present invention.

In one embodiment, the step of generating a regenerated 2D barcode is implemented with the same generator or algorithm used to generate the initial 2D barcode.

According to a third of its objects, the present invention relates to a computer program, comprising program instructions code to execute the method according to the first or the second objects of the present invention when said computer program is executed on a computer.

Thanks to the present invention, a given product physically associated with a 2D barcode according to the present invention can be identified and its protection against forgery is therefore improved. In particular, a 2D barcode readability by standard means and software application remains available while a dedicated software application according to the present invention will be able to recognize a fake product.

The present invention aims to prevent unauthorized generation of 2D barcodes intended to be used as product identifier of false products within a distribution channel.

The present invention can be implemented with no access to any database.

### DRAWINGS

Figure 1A illustrates a unique initial message comprising a unique identifier,
Figure 1B illustrates the unique initial message of figure 1A in a digital form,
Figure 1C illustrates a matrix of data comprising the initial message of figure 1A and redundancies of the initial message of figure 1A,
Figure 1D illustrates an initial 2D barcode corresponding to the unique initial message of figure 1A,
Figure 1E illustrates a final 2D barcode corresponding to the unique initial message of figure 1A according to the invention,
Figure 1F illustrates the difference between the initial 2D barcode of figure 1D and the final 2D barcode of figure 1E, and

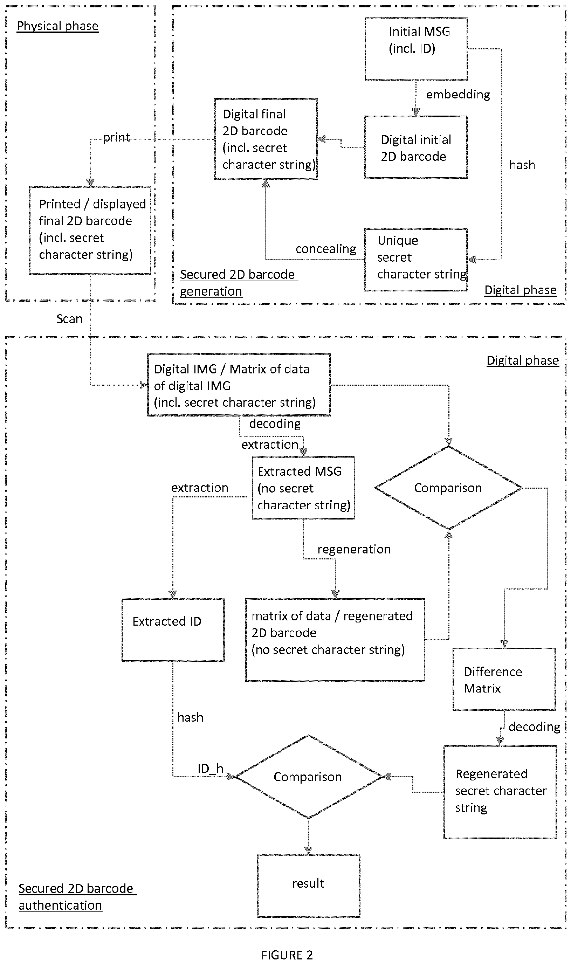

Figure 2 illustrates one embodiment of a method according to the invention.

### DETAILED DESCRIPTION

The man skilled in the art will understand that an "initial message" according to the present invention is not limited to URLs and can relate to any initial message, i.e. a sequence of alphanumeric or kanji characters.

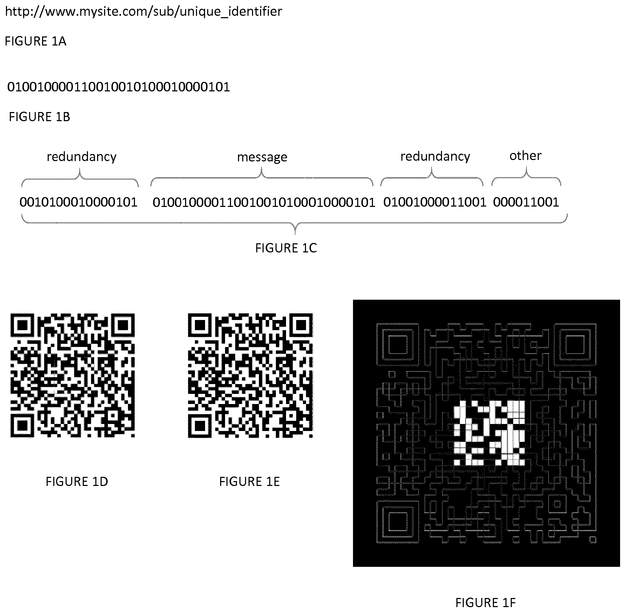

An initial message in its clear form (figure 1A) is readable by a human being. The initial message is transformed in a digital form (figure 1B) comprising sequence of bits of binary values which are readable by machines.

Therefore, as there is a unique correspondence between an initial message in its clear form and its digital form, an "initial message" according to the present description indistinctively relates to the initial message in its clear form or in its digital form.

Likewise, the man skilled in the art will understand that the present invention relates to any type of 2D barcode provided that said 2D barcode is redundant, i.e. in which at least parts (bits) of the initial message are redundant. Actual 2D barcodes being designed to be resistant to alterations related to manipulations, most of their standards implement at least one redundancy level in their protocol.

Similarly, the present invention is not limited to 2D barcodes to be affixed to a container, but relates to 2D barcodes which can be physically associated with any support, e.g. affixed to or inserted into said support, including labels.

An "initial message" according to the present invention contains a unique identifier and is therefore considered to be unique.

However, for the sake of conciseness of the present description, a "unique" initial message will just be called "initial message".

Still for the sake of conciseness, the only example described here after relates to an initial message being a URL, in which the corresponding 2D barcode is a QR code, which is to be affixed to a container, e.g. a container for food product(s). The man skilled in the art will understand that the present invention is not limited to such type of 2D barcodes, nor such use of 2D barcodes.

By "2D barcode" it is understood a graphical representation (figure 1D) that can be displayed or printed, or its digital corresponding matrix of data (figure 1C) indistinctively.

### 2D barcodes

The present invention aims to protect 2D barcodes against forgery, as soon as they include redundancy, as described here under.

The initial message is embedded in a 2D barcode. Therefore, there is a unique correspondence between said initial message, its corresponding 2D barcode, and its corresponding matrix of data.

And because the initial message is normally unique, the corresponding 2D barcode is normally also unique.

In a 2D barcode, the initial message is encoded as a set, or grid, of elementary predefined symbols, whose type can be binary (e.g. in the form of black/white squares - also called modules - in QR codes or datamatrix), or multiple (e.g. in the form of colored triangles in HCCB) according to protocols or standards known to the man skilled in the art.

In a 2D barcode, any parameters amongst the grid size (total number of elementary predefined symbols), the density (number of elementary predefined symbols per unit area), the printed or displayed size of each elementary predefined symbol, and the number of elementary predefined symbol possible colors (black and white for QRcode or datamatrix, number of colors used in HCCB) can be chosen or predefined.

In the present example, the initial message is a URL (figure 1A), i.e. an address of a specific web site, page or file on the Internet, and the unique identifier is a part of the URL.

For instance, the unique identifier is a unique number which enables to identify the container on which said 2D barcode is to be affixed to.

There is provided a step of generating an initial 2D barcode from the initial message (figure 1D), for instance with any 2D barcode generator that is available on the market.

The initial 2D barcode is then stored in a memory.

### UNIQUE SECRET CHARACTER STRING

It is also provided a step of generating a unique secret character string. The unique secret character string has a size which is less than or equal to a predefined fixed size. The secret character string can be e.g. an index of a database, a product code, an identifier, and so on.

Preferably, the size (indistinctively the length) of the secret character string is a function of at least one of the following parameters:
- the type of 2D barcode;
- the level of redundancy of the 2D barcode;
- the size of the 2D barcode;
- the length of the initial message;
- the length of the initial message data.

In one embodiment, the unique secret character string is generated independently from the unique initial message, meaning that the secret character string is not computed as a function of the initial message nor of the unique identifier. For instance, the function used to compute the secret character string can be a constant function.

Preferably, the unique secret character string is generated dependently from the initial message or from the unique identifier, meaning it is computed as a function of the initial message or of the unique identifier respectively.

In one embodiment, the unique secret character string is the result of a hash function applied to the unique identifier, or to the unique initial message.

The unique secret character string can also be computed as a function of the initial message or of the unique identifier respectively, together with another element such as, for instance, a constant number or a random number having a predefined length.

The present invention is not limited to hash functions, but encompasses any other one-way function, or any cryptographic function, used to map digital data of arbitrary size to digital data of fixed size.

Similarly to the encoding of the initial message, the unique secret character string is encoded as a set, or grid, of elementary predefined symbols, said elementary predefined symbols for the unique secret character string being the same type as the type of the elementary predefined symbols used to generate the initial 2D barcode: if the initial 2D barcode is e.g. a QR code or a datamatrix, the unique secret character string is encoded as a QR code or a datamatrix respectively.

The unique secret character string is then inserted, concealed, in a predefined area of the initial 2D barcode, within a predefined shape, here after called "secret zone", so as to create a final 2D barcode (figure 1E).

In the final 2D barcode, each predefined symbol of the unique secret character string replaces a corresponding existing predefined symbol in the secret zone of the initial 2D barcode to generate the final 2D barcode. Accordingly, because the length of the secret character string is quite small with regard to the length of the matrix of data of the initial 2D barcode, the final 2D barcode looks quite similar to its corresponding initial 2D barcode. The difference between the two is illustrated in figure 1F which also enables to illustrate the secret zone. It is worth noting that the total number of predefined symbols in the secret zone is greater than or equal to the total number of predefined symbols encoding the unique secret character string.

Preferably, within the secret zone, the predefined symbols of the concealed unique secret character string are adjacent in pairs.

In one embodiment, the encoding of the unique secret character string in the secret zone of the initial 2D barcode depends on the value (i.e. the color) of the existing predefined symbols in said secret zone, meaning the unique secret character string is encoded in the initial 2D barcode by changing the color of each existing predefined symbols in the secret zone.

For instance, for a colored 2D barcode such as a HCCB, the encoding of the unique secret character string can comprise the step of changing the color of each existing predefined symbol in the secret zone of the initial 2D barcode.

For a black & white 2D barcode such as e.g. a QR code, each predefined symbol is a binary value. The encoding of the unique secret character string in the secret zone of the initial 2D barcode then comprises the step of replacing the value of each existing predefined symbol which corresponds to the unique secret character string by its opposite binary value, similarly to a negative picture.

In another embodiment, the encoding of the secret character string in the secret zone of the initial 2D barcode does not depend on the value (i.e. the color) of the existing predefined symbols in the secret zone.

In such a case, the encoding of the secret character string can comprise the step of replacing (overwriting) the value of each preexisting predefined symbol in the secret zone of the initial 2D barcode by the value of the computed secret character string, regardless of its preexisting value. Accordingly, it may happen that one or more predefined symbols in the secret zone seems not to be replaced between the initial 2D barcode and the final 2D barcode.

For instance, the shape of the secret zone can be a rectangle of M*N predefined symbols. The secret character string can be encoded on m*n predefined symbols with m<M, n<N and M, N, m and n all being natural numbers where N can be equal to M and n can be equal to m.

Once the unique secret character string concealed in the secret zone, the final 2D barcode is stored in a memory. It can then be printed e.g. as a machine-readable optical label.

### REDUNDANCY

Preferably, the initial 2D barcode contains at least one redundant zone, each redundant zone corresponding to redundant data.

A redundant zone is an area in the initial 2D barcode comprising a set of predefined symbols which correspond to parts of the initial message that are already encoded in other zone(s), such repetition giving redundancy to the bits of the initial message.

Preferably, the level of redundancy (indistinctively level of robustness or error correction level) can be chosen. The higher the level of redundancy, the greater the resilience of the 2D barcode to interference (smudges, torn edges, image overlays etc.).

Accordingly, even if the initial 2D barcode is partially damaged, it can still be read, i.e. scanned by an optical sensor.

The present invention advantageously can take benefit of this redundancy property.

Preferably, the secret zone is comprised in a redundant zone. This way, the unique secret character string is concealed in the 2D barcode by altering only some of the redundant bits of the initial message, without altering the bits of the initial message itself.

Preferably, the length of the secret character string is chosen as a function of the level of redundancy. For instance, with a 2D barcode being a rectangle having a width equal to A, a length equal to B, a level of redundancy equal to X%, and a secret zone having a shape of a rectangle having a width equal to W and a length equal to E, it is preferable that W is less than or equal to X*A, and that E is less than or equal to X*B.

The position of the secret zone / each of the predefined symbols of the secret character string is known and can be predefined or chosen randomly, giving reliability and security to the final 2D barcode.

Preferably, the secret zone is concentric with the center of the 2D barcode.

In addition, the knowledge of the position of the secret zone is a security feature and a reliability feature.

Usually, the 2D barcode contains position/orientation patterns (also called blocks). In such case, the secret zone preferably does not overlap any of these position/orientation patterns.

The final 2D barcode may further contain alignment patterns or timing patterns. Preferably, the secret zone does not overlap any of these alignment or timing patterns.

In one embodiment, the secret character string is redundant, within the secret zone. It is also possible to generate several secret zones wherein the secret character string or the secret character strings can be distributed, provided the total size (number of predefined symbols) of the final 2D barcode is sufficient, i.e. greater than a predefined number.

### SCANNING

The final 2D barcode is scanned by an optical sensor and the digital image of the final 2D barcode is recorded in a memory. For instance said optical sensor and said memory are the ones of a communication device. By communication device, it is understood any device like e.g. a smartphone, a tablet, a PC and so on, comprising a processor, a memory and capable of establishing a communication process, and in particular a radio communication.

Said digital image can be rectified.

The digital image comprises the encoded unique secret character string.

The digital image is decoded by any decoder or software available on the market so as to extract from it both the message and the unique identifier.

Because the unique secret character string was encoded in a redundant zone, when the message is extracted from the digital image, the unique secret character string is not extracted, and cannot be extracted.

The extracted message does not contain the unique secret character string. Normally, i.e. if the printed final 2D barcode has not been altered, the extracted message equals the initial message.

The extracted message, which comprises the unique identifier, is recorded in a memory.

The unique identifier is extracted from the extracted message and recorded in a memory.

Further, there is provided a step of generating a regenerated matrix of data or a corresponding regenerated 2D barcode from the extracted message, with the same generator / algorithm used to generate the initial 2D barcode. Such matrix of data or 2D barcode is stored in a memory. For clarity reason, it will be called "regenerated" matrix of data or "regenerated" 2D barcode here after.

The regenerated matrix of data or the regenerated 2D barcode is normally identical to the initial matrix of data or the initial 2D barcode respectively. Such regeneration avoids accessing a database where the initial matrix of data or initial 2D barcode would have to be recorded, and transferring them over a communication network.

The regenerated matrix of data, respectively the regenerated 2D barcode, differs from the final matrix of data (i.e. the matrix of data corresponding to the final 2D barcode), respectively the final 2D barcode, in that the extracted matrix of data, respectively the final 2D barcode, does not contain the unique secret character string. It is normally identical to the initial matrix of data (i.e. the matrix of data corresponding to the initial 2D barcode).

The regenerated matrix of data (respectively regenerated 2D barcode) is compared with the final matrix of data (respectively final 2D barcode).

Preferably, the comparison step comprises computing the difference between the extracted matrix of data and the final matrix of data.

The result of the comparison step is called here after a "difference matrix" which is decoded as a "regenerated secret character string".

The regenerated secret character string, which normally corresponds to the unique secret character string, is stored in a memory.

The result of a one-way function used to map digital data of arbitrary size to digital data of fixed size, e.g. a hash function, and applied to the extracted unique identifier is recorded in a memory. Such one-way function is preferably the same as the one-way function used to generate the unique secret character string previously described. For clarity reason, such result is called here after ID_h.

Then it is possible to compare ID_h with the regenerated secret character string; and to generate a signal, the meaning of which depends on the result of that comparison.

For instance, if the result equals zero, then ID_h is equal to the regenerated secret character string and it is considered that the final 2D barcode (printed or digital) has not been altered. Then a signal meaning "OK" can be generated. If the result differs from zero, then a signal meaning "warning" can be generated.

Accordingly, there is no need to transfer the secret character string over a communication network.

Alterations of the printed final 2D barcode can occur because of the normal use of it, typically, its handling.

Alterations can also occur because of non-authorized / fake generation of a final 2D barcode. The present invention enables to detect such false final 2D barcodes. Advantageously, all steps described in the scanning section here above can be implemented on a same device, e.g. a communication device.

Alternatively, some can be implemented on a distant device, for instance a server, in communication with said communication device. Advantageously according to the present invention, there is no need to communicate the initial 2D barcode from a database to said communication device. The present invention can be implemented with just a communication device, as a stand-alone device.

### EXAMPLE

As a mere illustrative and non-limitative example, the message is a uniform resource locator comprising a unique identifier (e.g. http://www.mywebsite.com/product/product_id/), said identifier identifying a given product.

In a first digital phase, which can be implemented in a first context (for instance a production process), the message is embedded in an initial 2D barcode, such as e.g. a QR Code.

A hash function is applied to the identifier to create a unique secret character string.

The unique secret character string is concealed in a redundant zone of the initial QR Code to create a final QR Code.

The final QR Code is generated and physically associated to / applied to / affixed to / embedded in, a product, e.g. a food container.

Preferably, the unique identifier "product_id" identifies a unique product, in this case a unique container (not a batch).

In a non-digital phase, the product (food container) is made available for use, for instance in a factory, a warehouse, placed on the market, etc.

In a second digital phase, which can be implemented in a second context that can differ from the first context (for instance a production process, a logistic process, a commercial process, etc.) the final QR Code is scanned by a scanner, for instance a scanning application downloaded on a communication device.

A digital image IMG comprising the unique secret character string is recorded in a memory of the communication device.

The digital image is decoded as a matrix of data from which the extracted message (not comprising the secret character string) is extracted.

The extracted message is normally the message as if it would have been without the unique secret character string. It is then encoded as an extracted matrix of data, or regenerated 2D barcode, which does not contain the unique secret character string.

The difference between this extracted matrix of data and the matrix of data of the digital image is computed as a difference matrix from which a regenerated secret character string is decoded.

From the extracted message, the unique identifier is extracted, on which a hash function is applied, the result of which being compared with the regenerated secret character string, the hash function being the same as the hash function used to generate the unique secret character string.

If the QR code has not been altered, then the result of the hash function equals the regenerated secret character string.

A corresponding message can be triggered and displayed on the display screen of the communication device. On the contrary, if the result of the hash function is not equal to the regenerated secret character string, a corresponding warning or alarm message or signal can be triggered or displayed on the display screen of the communication device. Further investigations can be implemented to identify the reason of the warning e.g. a physical alteration due to handling might be acceptable.

Thanks to the present invention, an authenticating method is provided which can be implemented with a stand-alone device such as a communication device which does not need to access any database.

As a complementary security feature, it can be provided to provide the printed final 2D barcode with at least one optically variable device such as e.g. a holographic marker. Such feature enables protection against photocopying of the final 2D barcode.

Further controls of the secret character string can be provided, for instance comparing the secret character string with a reference character string in a database, whether online or offline.

The present invention enables a good and simple way to secure unique 2D barcodes.

Advantageously, an initial 2D barcode does not need to be printed.

## Claims

1. Method of securing a redundant initial 2D barcode comprising the steps of:
- Providing an initial message comprising a unique identifier (ID), and
- Encoding said initial message as a set of predefined symbols so as to generate said redundant initial 2D barcode, said redundant initial 2D barcode comprising at least one redundant zone,
**characterized in that** it further comprises:
- generating a unique secret character string having a predefined fixed size,
- encoding the unique secret character string as a set of predefined symbols identical to the symbols used to generate the redundant initial 2D barcode, and
- inserting said encoded unique secret character string in at least one redundant zone of the redundant initial 2D barcode, each symbol of said encoded unique secret character string having a predefined position, so as to create a final 2D barcode.

2. Method according to claim 1, wherein said redundant initial 2D barcode comprises a unique redundant zone, and wherein the step of inserting said unique secret character string comprises:
- inserting said unique secret character string within said unique redundant zone.

3. Method according to claim 1, wherein said redundant initial 2D barcode comprises several redundant zones, and wherein the step of inserting said unique secret character string comprises:
- inserting said unique secret character string within a predefined redundant zone, or
- inserting said unique secret character string within a plurality of said redundant zones.

4. Method according to any of the preceding claims, wherein the step of encoding the unique secret character string comprises the step of encoding the unique secret character string in a redundant manner.

5. Method according to any of the preceding claims, wherein the step of inserting said unique secret character string in at least one of the initial 2D barcode comprises a step of replacing, in said initial 2D barcode, an existing predefined symbol coding the initial message with a predefined symbol of the unique secret character string, for each predefined symbol of the unique secret character string.

6. Method according to any of the preceding claims, further comprising a step of computing the length of the unique secret character string as a function of at least one of the following parameters:
- the type of initial 2D barcode;
- the level of redundancy of the final 2D barcode;
- the size of the initial 2D barcode; and
- the length of the initial message.

7. Method according to any of the preceding claims, further comprising a step of printing the final 2D barcode, or displaying the final 2D barcode on a display screen.

8. Method according to claim 7, comprising a step of printing the final 2D barcode, and further comprising a step of providing the printed final 2D barcode with at least one optically variable device.

9. Method according to any of the preceding claims, wherein the step of generating a unique secret character string further comprises a step of either:
- computing the unique secret character string independently from the initial message; or
- computing the unique secret character string in dependence of the initial message or of the unique identifier, as a result of a one way function, or any cryptographic function, applied to the unique identifier, or applied to the initial message.

10. Method according to any of the preceding claims, comprising a step of providing a Uniform Resource Identifier as at least part of the initial message.

11. Method of authenticating a secured redundant 2D barcode which was produced with the method according to any of the preceding claims, and comprising a message and a unique identifier, said method comprising the steps of:
- scanning said 2D barcode with an optical sensor and recording the digital image of the 2D barcode obtained in a memory,
- decoding said digital image and extracting from it both the extracted message and the extracted unique identifier it contains,
**Characterized in that** it further comprises the steps of
- generating a regenerated 2D barcode from the extracted message, and
- comparing the regenerated 2D barcode with said digital image of the 2D barcode recorded in a memory.

12. Method according to claim 11, further comprising the steps of:
- decoding as a regenerated secret character string the result of the comparison step, and recording said regenerated secret character string in a memory,
- computing the result (ID_h) of a one-way function applied to the extracted unique identifier and recording said result in a memory, said one-way function preferably being the same as the one-way function used to generate the unique secret character string, and
- comparing said result (ID_h) with said regenerated secret character string.

13. Method according to any of claims 11 or 12, wherein the step of scanning said 2D barcode comprises a step of providing, as said 2D barcode, a final 2D barcode according to any of claims 1 to 9.

14. Method according to any of claim 11 to 13, wherein the step of generating a regenerated 2D barcode is implemented with the same generator or algorithm used to generate the initial 2D barcode.

15. Computer program, comprising program instructions code to execute the method according to any of the preceding claims when said computer program is executed on a computer.

## Patentansprüche

1. Verfahren zum Sichern eines redundanten anfänglichen 2D-Strichcodes, umfassend die Schritte:
- Bereitstellen einer anfänglichen Nachricht, umfassend eine eindeutige Kennung (ID), und
- Codieren der anfänglichen Nachricht als ein Satz vordefinierter Symbole, um den redundanten anfänglichen 2D-Strichcode zu erzeugen, wobei der redundante anfängliche 2D-Strichcode mindestens eine redundante Zone umfasst,
**dadurch gekennzeichnet, dass** das Verfahren ferner umfasst:
- Erzeugen einer eindeutigen geheimen Zeichenkette, die eine vordefinierte feste Größe aufweist,
- Codieren der eindeutigen geheimen Zeichenkette als ein Satz vordefinierter Symbole, die mit den zum Erzeugen des redundanten anfänglichen 2D-Strichcodes verwendeten Symbolen identisch sind, und
- Einfügen der codierten eindeutigen geheimen Zeichenkette in mindestens eine redundante Zone des redundanten anfänglichen 2D-Strichcodes, wobei jedes Symbol der codierten eindeutigen geheimen Zeichenkette eine vordefinierte Position aufweist, um einen abschließenden 2D-Strichcode zu erzeugen.

2. Verfahren nach Anspruch 1, wobei der redundante anfängliche 2D-Strichcode eine eindeutige redundante Zone umfasst und wobei der Schritt des Einfügens der eindeutigen geheimen Zeichenkette umfasst:
- Einfügen der eindeutigen geheimen Zeichenkette in die eindeutige redundante Zone.

3. Verfahren nach Anspruch 1, wobei der redundante anfängliche 2D-Strichcode mehrere redundante Zonen umfasst und wobei der Schritt des Einfügens der eindeutigen geheimen Zeichenkette umfasst:
- Einfügen der eindeutigen geheimen Zeichenkette in eine vordefinierte redundante Zone, oder
- Einfügen der eindeutigen geheimen Zeichenkette in eine Mehrzahl der redundanten Zonen.

4. Verfahren nach einem der vorstehenden Ansprüche, wobei der Schritt des Codierens der eindeutigen geheimen Zeichenkette den Schritt des Codierens der eindeutigen geheimen Zeichenkette auf redundante Weise umfasst.

5. Verfahren nach einem der vorstehenden Ansprüche, wobei der Schritt des Einfügens der eindeutigen geheimen Zeichenkette in mindestens einen der anfänglichen 2D-Strichcodes für jedes vordefinierte Symbol der eindeutigen geheimen Zeichenkette einen Schritt des Ersetzens eines vorhandenen vordefinierten Symbols in dem/den anfänglichen 2D-Strichcode(s) umfasst, das die anfängliche Nachricht mit einem vordefinierten Symbol der eindeutigen geheimen Zeichenkette codiert.

6. Verfahren nach einem der vorstehenden Ansprüche, ferner umfassend einen Schritt des Berechnens der Länge der eindeutigen geheimen Zeichenkette als eine Funktion von mindestens einem der folgenden Parameter:
- des Typs des anfänglichen 2D-Strichcodes;
- der Redundanzstufe des abschließenden 2D-Strichcodes;
- der Größe des anfänglichen 2D-Strichcodes; und
- der Länge der anfänglichen Nachricht.

7. Verfahren nach einem der vorstehenden Ansprüche, ferner umfassend einen Schritt des Druckens des abschließenden 2D-Strichcodes oder des Anzeigens des abschließenden 2D-Strichcodes auf einem Anzeigebildschirm.

8. Verfahren nach Anspruch 7, umfassend einen Schritt des Druckens des abschließenden 2D-Strichcodes und ferner umfassend einen Schritt des Bereitstellens des gedruckten abschließenden 2D-Strichcodes mit mindestens einer optisch variablen Einrichtung.

9. Verfahren nach einem der vorstehenden Ansprüche, wobei der Schritt des Erzeugens einer eindeutigen geheimen Zeichenkette ferner einen Schritt umfasst
- entweder des Berechnens der eindeutigen geheimen Zeichenkette unabhängig von der anfänglichen Nachricht;
- oder des Berechnens der eindeutigen geheimen Zeichenkette in Abhängigkeit von der anfänglichen Nachricht oder der eindeutigen Kennung als Ergebnis einer Einwegfunktion oder einer beliebigen kryptografischen Funktion, angewandt auf die eindeutige Kennung oder angewandt auf die anfängliche Nachricht.

10. Verfahren nach einem der vorstehenden Ansprüche, umfassend einen Schritt des Bereitstellens einer einheitlichen Ressourcenkennung (Uniform Resource Identifier) mindestens als Teil der anfänglichen Nachricht.

11. Verfahren zum Authentifizieren eines gesicherten redundanten 2D-Strichcodes, der mit dem Verfahren nach einem der vorstehenden Ansprüche erzeugt worden ist, und umfassend eine Nachricht und eine eindeutige Kennung, wobei das Verfahren die Schritte umfasst:
- Scannen des 2D-Strichcodes mit einem optischen Sensor und Aufzeichnen des digitalen Bildes des erhaltenen 2D-Strichcodes in einem Speicher,
- Decodieren des digitalen Bildes und Extrahieren sowohl der extrahierten Nachricht als auch der darin enthaltenen extrahierten eindeutigen Kennung daraus,
**dadurch gekennzeichnet, dass** das Verfahren ferner die Schritte umfasst:
- Erzeugen eines regenerierten 2D-Strichcodes aus der extrahierten Nachricht, und
- Vergleichen des regenerierten 2D-Strichcodes mit dem in einem Speicher aufgezeichneten digitalen Bild des 2D-Strichcodes.

12. Verfahren nach Anspruch 11, ferner umfassend die Schritte:
- Decodieren des Ergebnisses des Vergleichsschritts als eine regenerierte geheime Zeichenkette und Aufzeichnen der regenerierten geheimen Zeichenkette in einem Speicher,
- Berechnen des Ergebnisses (ID_h) einer auf die extrahierte eindeutige Kennung angewandten Einwegfunktion und Aufzeichnen des Ergebnisses in einem Speicher, wobei die Einwegfunktion vorzugsweise die gleiche ist wie die zum Erzeugen der regenerierten geheimen Zeichenkette verwendete Einwegfunktion, und
- Vergleichen des Ergebnisses (ID_h) mit der regenerierten geheimen Zeichenkette.

13. Verfahren nach einem der Ansprüche 11 oder 12, wobei der Schritt des Scannens des 2D-Strichcodes einen Schritt des Bereitstellens eines abschließenden 2D-Strichcodes nach einem der Ansprüche 1 bis 9 als den 2D-Strichcode umfasst.

14. Verfahren nach einem der Ansprüche 11 bis 13, wobei der Schritt des Erzeugens eines regenerierten 2D-Strichcodes mit dem gleichen Generator oder Algorithmus implementiert wird, der zum Erzeugen des anfänglichen 2D-Strichcodes verwendet wird.

15. Rechnerprogramm, umfassend Programmanweisungscode zum Durchführen des Verfahrens nach einem der vorstehenden Ansprüche, wenn das Rechnerprogramm auf einem Rechner ausgeführt wird.

## Revendications

1. Procédé de sécurisation d'un code à barres 2D initial redondante, comprenant les étapes consistant à :
- fournir un message initial contenant un identifiant unique (ID), et
- coder ledit message initial en tant qu'ensemble de symboles prédéfinis afin de générer ledit code à barres 2D initial redondant, ledit code à barres 2D initial redondant comprenant au moins une zone redondante,
**caractérisé en ce qu'**il comprend également les étapes consistant à :
- générer une chaîne de caractères secrète unique ayant une taille fixe prédéfinie,
- coder la chaîne de caractères secrète unique en tant qu'ensemble de symboles prédéfinis identiques aux symboles utilisés pour générer le code à barres 2D initial redondant, et
- insérer ladite chaîne de caractères secrète unique codée dans au moins une zone redondante du code à barres 2D initial redondant, chaque symbole de ladite chaîne de caractères secrète unique codée ayant une position prédéfinie, afin de créer un code à barres 2D final.

2. Procédé selon la revendication 1, dans lequel ledit code à barres 2D initial redondant comprend une zone redondante unique, et dans lequel l'étape d'insertion de ladite chaîne de caractères secrète unique comprend l'étape consistant à :
- insérer ladite chaîne de caractères secrète unique à l'intérieur de ladite zone redondante unique.

3. Procédé selon la revendication 1, dans lequel ledit code à barres 2D initial redondant comprend plusieurs zones redondantes, et dans lequel l'étape d'insertion de ladite chaîne de caractères secrète unique comprend les étapes consistant à :
- insérer ladite chaîne de caractères secrète unique à l'intérieur d'une zone redondante prédéfinie, ou
- insérer ladite chaîne de caractères secrète unique à l'intérieur d'une pluralité desdites zones redondantes.

4. Procédé selon l'une quelconque des revendications précédentes, dans lequel l'étape de codage de la chaîne de caractères secrète unique comprend l'étape consistant à coder la chaîne de caractères secrète unique d'une manière redondante.

5. Procédé selon l'une quelconque des revendications précédentes, dans lequel l'étape d'insertion de la chaîne de caractères secrète unique dans au moins un des codes à barres 2D initiaux comprend une étape consistant à remplacer, dans lesdits au moins un des codes à barres 2D initiaux, un symbole prédéfini existant codant le message initial avec un symbole prédéfini de la chaîne de caractères secrète unique, pour chaque symbole prédéfini de la chaîne de caractères secrète unique.

6. Procédé selon l'une quelconque des revendications précédentes, comprenant également une étape de calcul de la longueur de la chaîne de caractères secrète unique en fonction d'au moins un des paramètres suivants :
- le type du code à barres 2D initial ;
- le niveau de redondance du code à barres 2D final ;
- la taille du code à barres 2D initial ; et
- la longueur du message initial.

7. Procédé selon l'une quelconque des revendications précédentes, comprenant également une étape d'impression du code à barres 2D final, ou d'affichage du code à barres 2D final sur un écran d'affichage.

8. Procédé selon la revendication 7, comprenant une étape d'impression du code à barres 2D final, et comprenant également une étape consistant à fournir au code à barres 2D final imprimé au moins un dispositif variable optiquement.

9. Procédé selon l'une quelconque des revendications précédentes, dans lequel l'étape de génération d'une chaîne de caractères secrète unique comprend également une étape consistant :
- soit à calculer la chaîne de caractères secrète unique indépendamment du message initial ;
- soit à calculer la chaîne de caractères secrète unique en fonction du message initial ou de l'identifiant unique, en résultat de l'application d'une fonction unidirectionnelle, ou de n'importe quelle fonction cryptographique, appliquée à l'identifiant unique, ou appliquée au message initial.

10. Procédé selon l'une quelconque des revendications précédentes, comprenant une étape consistant à fournir un identifiant de ressource uniforme constituant au moins une partie du message initial.

11. Procédé d'authentification d'un code à barres 2D redondant sécurisé qui a été produit avec le procédé selon l'une quelconque des revendications précédentes, et comprenant un message et un identifiant unique, ledit procédé comprenant les étapes consistant à :
- balayer ledit code à barres 2D avec un capteur optique et enregistrer l'image numérique du code à barres 2D obtenu dans une mémoire,
- décoder ladite image numérique et en extraire à la fois le message extrait et l'identifiant unique extrait qu'elle contient,
**caractérisé en ce qu'**il comprend également les étapes consistant à
- générer un code à barres 2D régénéré à partir du message extrait, et
- comparer le code à barres 2D régénéré à ladite image numérique du code à barres 2D enregistré dans une mémoire.

12. Procédé selon la revendication 11, comprenant également les étapes consistant à :
- décoder sous forme de chaîne de caractères secrète régénérée le résultat de l'étape de comparaison, et enregistrer ladite chaîne de caractères secrète régénérée dans une mémoire,
- calculer le résultat (ID_h) d'une fonction unidirectionnelle appliquée à l'identifiant unique extrait et enregistrer ledit résultat dans une mémoire, ladite fonction unidirectionnelle étant de préférence identique à la fonction unidirectionnelle utilisée pour générer la chaîne de caractères secrète unique, et
- comparer ledit résultat (ID_h) à ladite chaîne de caractères secrète régénérée.

13. Procédé selon l'une quelconque des revendications 11 et 12, dans lequel l'étape de balayage dudit codes à barres 2D comprend une étape consistant à fournir, en tant que dit code à barres 2D, un code à barres 2D final selon l'une quelconque des revendications 1 à 9.

14. Procédé selon l'une quelconque des revendications 11 à 13, dans lequel l'étape de génération d'un code à barres 2D régénéré est mise en œuvre avec le même générateur ou algorithme que celui utilisé pour générer le code à barres 2D initial.

15. Programme informatique, contenant un code d'instructions de programme permettant d'exécuter le procédé selon l'une quelconque des revendications précédentes lorsque ledit programme informatique est exécuté sur un ordinateur.
